# EUROPÄISCHE PATENTANMELDUNG

(11) **EP 2 107 659 A1**
(43) Veröffentlichungstag der Anmeldung: **07.10.2009**
(21) Anmeldenummer: 09155806.4
(22) Anmeldetag: 21.03.2009
(51) Int. Cl.: H02G 5/00

(54) **Stromschiene**

(30) Priorität: 01.04.2008 CH 5072008
(71) Anmelder: Zurecon AG, 8003 Zürich (CH)
(72) Erfinder: Pfluger, Gerd, CH-4625, Oberbuchsiten (CH)
(74) Vertreter: Rutz & Partner

(57) **Zusammenfassung**

Die Stromschiene (1) weist einen gegossenen Isolationskörper (12) aus Isolationsmaterial, wie Giessharz oder Polymerbeton, auf, in dem mehrere elektrische Leiter (11) eingeschlossen sind. Erfindungsgemäss sind wenigstens auf einer oder zwei einander gegenüberliegenden Seiten (121, 122) der Stromschiene (1) Rippen (1211, 1221) in den Isolationskörper (12) eingeformt, deren Höhe vorzugsweise im Bereich von 1/5 bis viele 1/20 des Abstandes zwischen den zwei einander gegenüberliegenden Seiten (121, 122) liegt.

## Beschreibung

Die Erfindung betrifft eine Stromschiene nach dem Oberbegriff des Patentanspruchs 1.

Stromschienen und deren Verwendung sowie dafür vorgesehene Befestigungsvorrichtungen sind beispielsweise in [1], Produktkatalog "Niederspannungs-Schienenverteiler LANZ HE 2.5.2" der LANZ OENSINGEN AG vom Februar 2006 beschrieben.

Stromschienen bzw. Stromschienenverteiler werden als Übertragungsleitungen zwischen Transformator, Haupt- und Unterverteiler in Gebäuden oder Anlagen eingesetzt. Typischerweise werden Stromschienen in Fabrikhallen, Gewerbe- und Verwaltungsgebäuden oder auch als Steigleitungen in Hochbauten eingesetzt.

Zur Minimierung von durch den Skineffekt oder durch den Proximity-Effekt verursachten Verlusten werden normalerweise Stromschienen mit mehreren, allgemein n mal m Kupfer- oder Aluminium-Leitern verwendet. Grundlagen der Berechnung von Stromschienen finden sich beispielsweise in [2], D. Nelles und Ch. Tuttas, Elektrische Energietechnik, Leitfaden der Elektrotechnik, Teubner Verlag, Stuttgart 1977, Seite 187.

Einzelne Stromschienenbauteile, die beispielsweise in Giessharz oder Polymerbeton vergossen und in Blech gekapselt sind, können dabei ein Gewicht von mehreren 100 kg aufweisen. Um das Gewicht und die Abmessungen möglichst gering zu halten, wird daher versucht, die angewendete Giessharzmenge auf ein Minimum zu reduzieren. Bestehende Stromschienen weisen daher ein zumindest annähernd rechteckiges Profil mit möglichst minimalem Durchmesser auf.

Zur Verbindung der einzelnen Stromschienenbauteile sind Kupplungen verwendbar, wie sie in [1], Seiten 2 und 9 beschrieben sind. Durch diese Kupplungen erfolgt eine zuverlässige elektrische und mechanische Verbindung der elektrischen Leiter.

Die Stromschienen werden unter Berücksichtigung des erforderlichen Belastungsstroms, der verwendeten Metallleiter sowie der vorliegenden Umgebungstemperatur gewählt (siehe [1], Seite 12). Wird ein höherer Belastungsstrom benötigt, so wird eine leistungsfähigere Stromschiene verwendet. Bei diesen leistungsfähigeren Stromschienen liegen Leiter mit einem grösseren Querschnitt oder Leiter aus edlerem Metall vor, weshalb die Kosten dieser leistungsfähigeren Stromschiene deutlich höher liegen.

Der vorliegenden Erfindung liegt die Aufgabe zugrunde, leistungsfähige und zugleich kostengünstige Stromschienen zu schaffen.

Diese Aufgabe wird mit einer Stromschiene gelöst, welche die in Anspruch 1 angegebenen Merkmale aufweist. Vorteilhafte Ausgestaltungen der Erfindung sind in weiteren Ansprüchen angegeben.

Die Stromschiene weist einen gegossenen Isolationskörper aus Isolationsmaterial, wie Giessharz oder Polymerbeton, auf, in dem mehrere elektrische Leiter eingeschlossen sind. Erfindungsgemäss ist auf wenigstens einer, besonders vorteilhaft sind jedoch auf zwei einander gegenüberliegenden Seiten der Stromschiene je eine Vielzahl von Rippen in den Isolationskörper eingearbeitet bzw. eingeformt. Obwohl der Isolationskörper aus elektrisch und somit auch thermisch nicht leitendem Material besteht, wird durch die erfindungsgemässen Massnahmen eine deutlich höhere Belastbarkeit einer Stromschiene mit unverändertem Leiterquerschnitt erzielt. Besonders wesentlich ist ferner, dass mit den erfindungsgemässen Massnahmen mit unedleren Leitermetallen eine Belastbarkeit erzielt werden kann, wie bei edleren Leitermetallen mit gleichem Leiterquerschnitt. Durch die erfindungsgemässen Massnahmen können daher kostengünstigere Metalle eingesetzt werden und somit wertvolle Rohstoffe eingespart werden.

Besonders vorteilhaft ist ferner, dass für die erfindungsgemässe Stromschiene weiterhin konventionelle elektrische Leiter mit einfachem Profil, beispielsweise quaderförmige Metallstäbe, verwendet werden können. Selbstverständlich sind auch andere Leiterquerschnitte wählbar. Beispielsweise sind Rundstäbe mit kreisförmigem Leiterquerschnitt wählbar.

In einer vorzugsweisen Ausgestaltung sind die Rippen derart voneinander beanstandet, dass die Rippen von zwei benachbarten Stromschienen ineinander eingreifen können. Mit dieser Massnahme gelingt es, erfindungsgemässe Stromschienen mit minimalem Platzbedarf zu lagern und zu transportieren.

Vorzugsweise sind die Rippen an den einander gegenüberliegenden Seiten derart versetzt gegeneinander angeordnet sind, dass zwei Stromschienen, deren Rippen ineinander eingreifen, auf gleicher Höhe liegen. Dies erlaubt es, erfindungsgemässe Stromschienen, deren Rippen ineinander verzahnt sind (vorzugsweise aber nicht direkt einander anliegen) Raum sparend zu installieren.

Die Rippen verlaufen am Körper der Stromschiene vorzugsweise senkrecht zu den elektrischen Leitern. Da die Stromschienen und somit auch die elektrischen Leiter normalerweise horizontal installiert sind, bleibt dadurch gewährleistet, dass Luft die Rippen unbehindert umströmen kann. In einer besonders vorteilhaften Ausgestaltung werden die Rippen entsprechend der Installationsart der Stromschiene derart angeordnet, dass sie nach der Installation der Stromschiene im Raum vertikal verlaufen.

Die Rippen werden vorzugsweise an den nach der Installation vertikal ausgerichteten Seiten und nicht an der Unterseite oder der Oberseite der Stromschiene vorgesehen. Damit der erfindungsgemässe Vorteile jedoch auch weitgehend unabhängig von der Strömungsrichtung der Luft auftritt, werden vorzugsweise Rippen vorgesehen, die je in sich geschlossen den Körper der Stromschiene umschliessen.

Der Querschnitt der Rippen bildet vorzugsweise zumindest annähernd ein Rechteck, ein Trapez, einen Stern oder ein Kreissegment. Querschnitte welche den Rippen eine grössere Oberfläche verleihen, werden bevorzugt.

Die Höhe der Rippen wird vorzugsweise im Bereich von 1/5 bis ein 1/20 des Abstandes zwischen den zwei einander gegenüberliegenden Seiten gewählt. Der Abstand zwischen zwei benachbarten Rippen entspricht vorzugsweise etwa der Höhe der Rippen, kann aber auch in beide Richtungen um 50% davon abweichen.

Die Stromschiene kann ferner, vorzugsweise zusätzlich zu den Rippen in Giessharz, mit einem Metallelement oder einer die Stromschiene umschliessenden Metallmanschette versehen sein, welche nach aussen ragende Metallrippen aufweist, mittels derer ein Wärmeaustausch mit der Umgebungsluft erfolgt.

In einer bevorzugten Ausgestaltung ist die Metallmanschette mit nach innen ragenden Rippen versehen, die in das Giessharz eingreifen und vorzugsweise darin verankert sind.

Nachfolgend wird die Erfindung anhand von Zeichnungen näher erläutert. Dabei zeigt:
- Figur 1: ein Endstück einer bekannten Stromschiene 1' mit vier in einem Isolationskörper 12 eingebetteten elektrischen Leitern 11, deren Enden frei liegen;
- Figur 2: die Verbindung der Enden von zwei bekannten Stromschienen 1A, 1B gemäss Figur 1 mittels Montagemitteln 21, 22, 23;
- Figur 3: eine erfindungsgemässe, aus Giessharz gefertigte Stromschiene 1, die an zwei einander gegenüberliegenden Seiten 121, 122 mit in den Giessharz eingeformten Rippen 1211, 1221 versehen ist;
- Figur 4: zwei Stromschienen 1 gemäss Figur 3, deren Rippen 1211, 1221 derart beabstandet sind, dass sie ineinander eingreifen können;
- Figur 5: eine ein- oder mehrteilige Stromschiene 1, die beispielsweise im Bereich eines Kopplungspunktes von einer Metallmanschette 15 umschlossen ist, welche nach innen und nach aussen ragende Rippen 151, 152 aufweist.

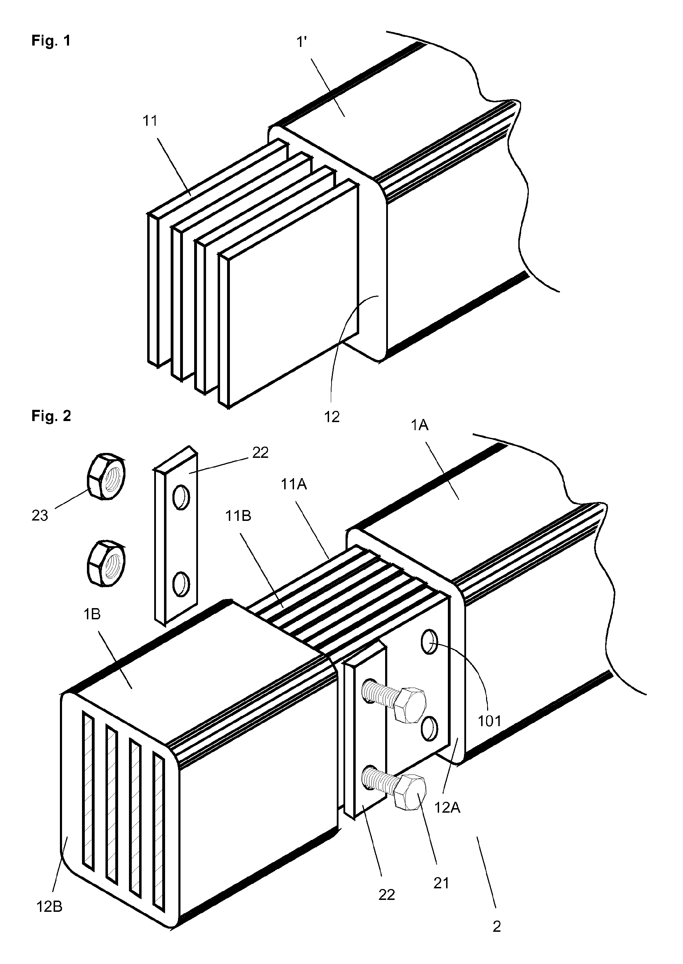

Figur 1 zeigt ein Endstück einer z.B. aus [1] bekannten Stromschiene 1' mit vier in einem Isolationskörper 12 eingebetteten elektrischen Leitern 11, deren Enden frei liegen.

Figur 2 zeigt die Verbindung der Enden von zwei bekannten Stromschienen 1A, 1B mittels Montagemitteln 21, 22, 23, welche Schrauben 21, Schraubenmuttern 23 und weitere Hilfselemente, wie eine Kontaktplatte 22 umfassen. Möglich ist die zusätzliche Verwendung beispielsweise von Pressplatten, Kontaktlaschen und Spannscheiben. In Figur 2 ist gezeigt, dass die Schrauben 21, welche paarweise eine Kontaktplatte 22 halten, durch Bohrungen 101 in den Leiterenden 11A, 11B geführt und mit Schraubenmuttern 23 verbunden sind. Bei den bekannten Stromschienen wurde vorgesehen, dass die aus Giessharz bestehende Isolationsschicht die elektrischen Leiter soweit umschliesst, dass diese mechanisch sicher gehalten und nach aussen isoliert sind.

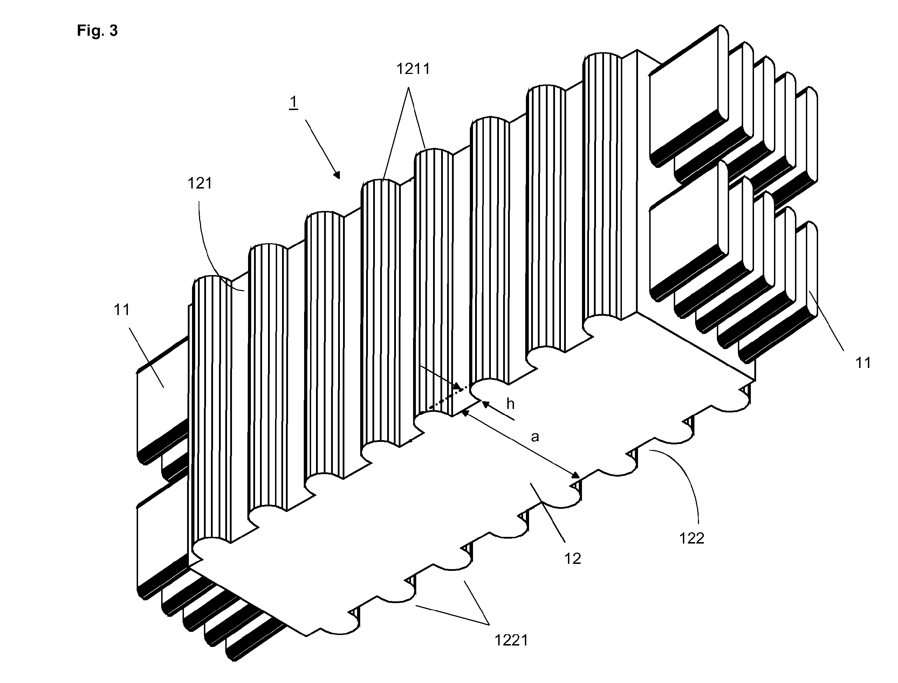

Figur 3 zeigt eine erfindungsgemässe Stromschiene 1 mit einem Isolationskörper 12, der aus Isolationsmaterial, wie Giessharz oder Polymerbeton, gegossen ist und zwei Gruppen mit je fünf elektrischen Leitern 11 umfasst. Die zwei vertikal ausgerichteten, einander gegenüberliegenden Seiten 121 bzw. 122 des Isolationskörpers 12 sind je mit acht vertikal ausgerichteten Rippen 1211 bzw. 1221 versehen, mittels derer die von Luft umströmte Oberfläche des Isolationskörpers signifikant vergrössert wird. Obwohl der Isolationskörper aus gut isolierendem Material besteht und bekanntlich insbesondere die elektrischen Leiter thermisch gut leitend sind, resultiert mit den erfindungsgemässen Massnahmen eine Stromschiene mit wesentlich höherer Belastbarkeit.

Die Unterseite und die Oberseite der Stromschiene 1 sind in dieser vorzugsweisen Ausgestaltung nicht mit Rippen versehen. Dies hat den Vorteil, dass die schwere Stromschiene auf einer Unterlage, beispielsweise einer Tragvorrichtung, leicht verschoben werden kann, ohne dass Widerstände auftreten.

Die Höhe h der Rippen 1211 und 1221 wird vorzugsweise im Bereich von 1/5 bis ein 1/20 des Abstandes a zwischen den zwei einander gegenüberliegenden Seiten 121, 122 gewählt. Der Abstand zwischen zwei benachbarten Rippen 1211, 1211 bzw. 1221, 1221 entspricht vorzugsweise etwa der Höhe h, kann aber auch in beide Richtungen um 50% davon abweichen.

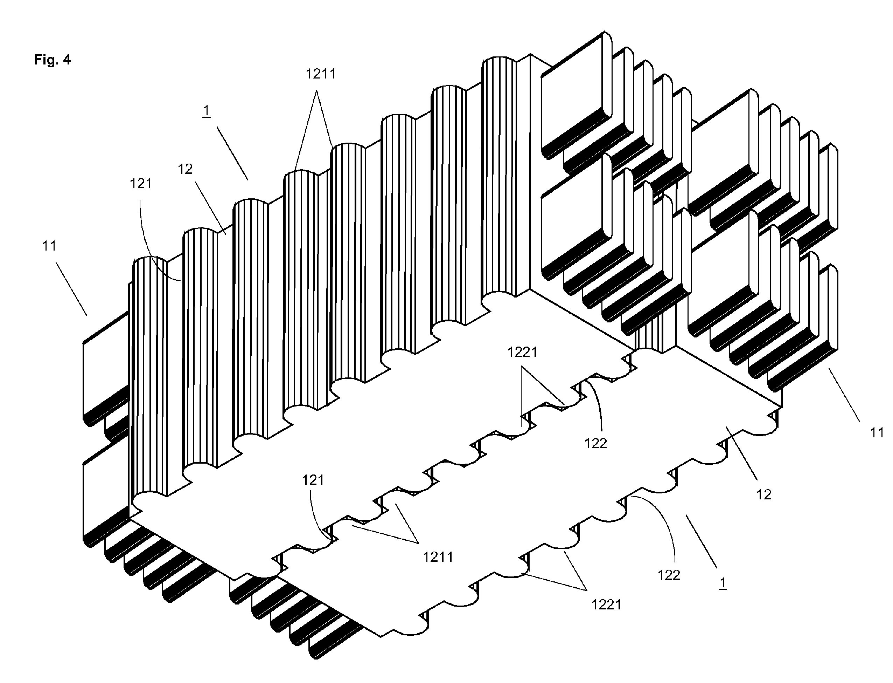

Figur 4 zeigt zwei Stromschienen 1 gemäss Figur 3, deren Rippen 1211 bzw. 1221 auf jeder Seite 121 bzw. 122 derart beabstandet sind, dass sie ineinander eingreifen können. Dadurch gelingt es, erfindungsgemässe Stromschienen 1 auf reduziertem Raum zu lagern und zu transportieren.

Sofern die Rippen 1211 bzw. 1221 der zueinander korrespondierenden Seiten 121 bzw. 122 entsprechend gegeneinander verschoben sind, können die Rippen 1211 und 1221 ineinander eingreifen, während die beiden Stromschienen 1 auf gleicher Höhe gehalten sind. Zu diesem Zwecke können auf einer der Seiten 121 oder 122 eine Rippe weggelassen und die dort verbleibenden Rippen 1211 oder 1221 entsprechend verschoben werden.

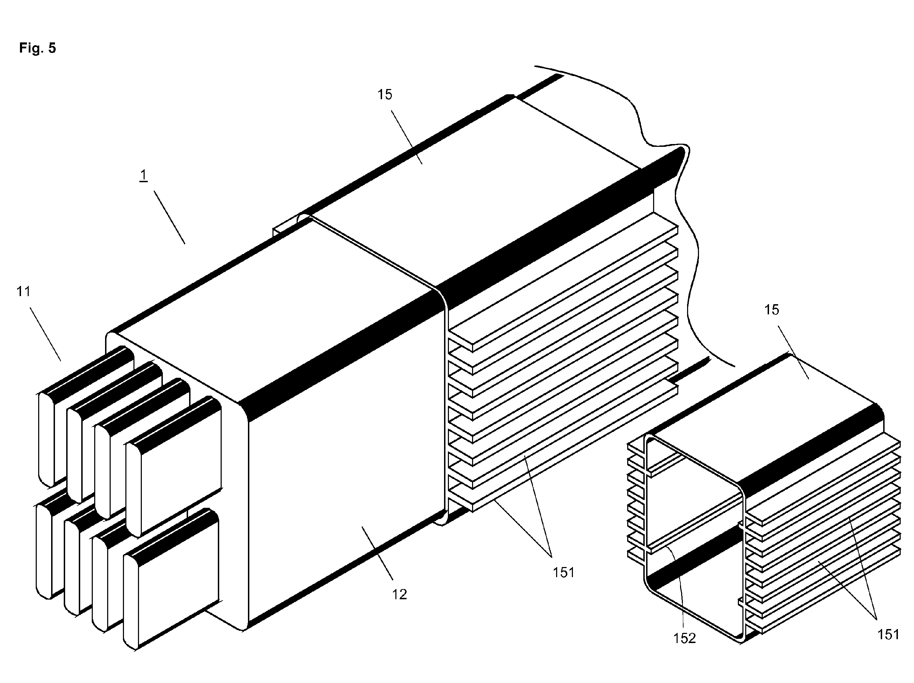

Figur 5 zeigt eine ein- oder mehrteilige Stromschiene 1, die beispielsweise im Bereich eines Kopplungspunktes von einer Metallmanschette 15 umschlossen ist, welche nach innen und nach aussen ragende Rippen 151, 152 aufweist. Die Metallmanschette 15 kann bei Stromschienen 1 gemäss Figur 1 und 3 vorteilhaft angewendet werden. Beispielsweise kann die Metallmanschette 15 im Kopplungsbereich von zwei Stromschienen 1A, 1B (siehe Figur 2) eingesetzt werden. Die Metallmanschette 15, die gleichzeitig als Strahlungsschild und als thermischer Leiter dient, wird vorzugsweise zusammen mit den elektrischen Leitern in einem Vorgang vergossen. Die nach innen ragenden Rippen 152, die auch als Ankerelemente ausgestaltet sein können, werden daher in den Giessharz eingegossen, und können diesem, während des Betriebs der Stromschiene 1, Wärme entziehen und zu den nach aussen ragenden Rippen 151 übertragen. Anstelle einer Metallmanschette 15 können auch nur einzelne Metallplatten vorgesehen werden, die vorzugsweise ebenfalls mittels Ankerelementen (152) mit der Stromschiene 1 verbunden werden.

## Patentansprüche

1. Stromschiene (1) mit einem gegossenen Isolationskörper (12) aus Isolationsmaterial, wie Giessharz oder Polymerbeton, in dem mehrere elektrische Leiter (11) eingeschlossen sind, **dadurch gekennzeichnet, dass** wenigstens auf einer oder zwei einander gegenüberliegenden Seiten (121, 122) der Stromschiene (1) eine Vielzahl von Rippen (1211, 1221) in den Isolationskörper (12) eingeformt sind.

2. Stromschiene (1) nach Anspruch 1, **dadurch gekennzeichnet, dass** die Rippen (1211, 1221) derart voneinander beanstandet sind, dass die Rippen (1211, 1221) von zwei benachbarten Stromschienen (1) ineinander eingreifen können.

3. Stromschiene (1) nach Anspruch 2, **dadurch gekennzeichnet, dass** die Rippen (1211, 1221) an den einander gegenüberliegenden Seiten (121, 122) derart versetzt gegeneinander angeordnet sind, dass zwei Stromschienen (1) deren Rippen (1211, 1221) ineinander eingreifen, auf gleicher Höhe liegen.

4. Stromschiene (1) nach Anspruch 1, 2 oder 3, **dadurch gekennzeichnet, dass** die Rippen (1211, 1221) senkrecht zu den elektrischen Leitern (11) verlaufen oder, dass die Rippen (1211, 1221) derart angeordnet sind, dass sie nach der Installation der Stromschiene (1) im Raum vertikal verlaufen.

5. Stromschiene (1) nach Anspruch 4, **dadurch gekennzeichnet, dass** die Rippen (1211, 1221), je in sich geschlossen, den Körper (12) umschliessen.

6. Stromschiene (1) nach einem der Ansprüche 1-5, **dadurch gekennzeichnet, dass** der Querschnitt der Rippen (1211, 1221) ein Rechteck, ein Trapez, ein Stern oder ein Kreissegment bildet.

7. Stromschiene (1) nach einem der Ansprüche 1-6, **dadurch gekennzeichnet, dass** die Höhe (h) der Rippen (1211, 1221) im Bereich von 1/5 bis 1/20 des Abstandes (a) zwischen den zwei einander gegenüberliegenden Seiten (121, 122) liegt, die mit den Rippen (1211, 1221) versehen sind und dass der Abstand der Rippen (1211, 1221) vorzugsweise etwa der Höhe (h) entspricht oder um 50% davon abweicht.

8. Stromschiene (1) insbesondere nach einem der Ansprüche 1-7, **dadurch gekennzeichnet, dass** die Stromschiene (1) von einer Metallmanschette (15) umschlossen oder mit einer Metallplatte versehen ist, welche nach aussen ragende Metallrippen (151) aufweist.

9. Stromschiene (1) nach Anspruch 8, **dadurch gekennzeichnet, dass** Metallmanschette (15) oder die Metallplatte nach innen ragende Metallrippen (151) aufweist, die von Giessharz umschlossen und vorzugsweise gehalten sind.

10. Stromschiene (1) nach Anspruch 8 oder 9, **dadurch gekennzeichnet, dass** die nach aussen ragenden Metallrippen (151) senkrecht zu den elektrischen Leitern (11) verlaufen oder, dass die nach aussen ragenden Metallrippen (151) derart gewählt sind, dass sie nach der Installation der Stromschiene (1) im Raum vertikal verlaufen.
